# EUROPEAN PATENT SPECIFICATION

(11) **EP 3 174 321 B1**
(45) Date of publication and mention of the grant of the patent: **03.06.2020**
(21) Application number: 14881836.2
(22) Date of filing: 02.12.2014
(51) Int. Cl.: H04W 4/24, H04L 12/14, H04W 8/08, H04L 12/24

(54) **LIPA SESSION RECOGNITION METHOD, DEVICE AND SYSTEM, AND COMPUTER STORAGE MEDIUM**
LIPA-SITZUNGSERKENNUNGSVERFAHREN, VORRICHTUNG UND SYSTEM SOWIE COMPUTERSPEICHERMEDIUM
PROCÉDÉ, DISPOSITIF ET SYSTÈME DE RECONNAISSANCE DE SESSION LIPA, ET SUPPORT D'INFORMATIONS

(30) Priority: 21.07.2014 CN 201410349009
(43) Date of publication of application: 31.05.2017
(73) Proprietor: ZTE Corporation, Shenzhen, Guangdong 518057 (CN)
(72) Inventor: LIU, Xiaojing, Shenzhen Guangdong 518057 (CN); ZHENG, Fangting, Shenzhen Guangdong 518057 (CN); TIAN, Hui, Shenzhen Guangdong 518057 (CN)
(74) Representative: Ligi, Stefano
(86) International application number: PCT/CN2014/092790
(87) International publication number: WO 2015/117480

(56) References cited:
- WO-A2-2010/128773
- WO-A2-2013/006417
- CN-A- 102 088 771
- CN-A- 102 422 673
- CN-A- 103 428 670
- US-A1- 2013 010 756
- "3rd Generation Partnership Project; Technical Specification Group Services and System Aspects; Policy and charging control architecture (Release 7)", 3GPP DRAFT; 23203-7E1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 19 July 2012 (2012-07-19), XP050909894, Retrieved from the Internet: URL:http://www.3gpp.org/ftp/Specs/2014-12/ Rel-7/23_series/ [retrieved on 2012-07-19]

## Description

### TECHNICAL FIELD

The disclosure relates to Local Internet Protocol (IP) Access (LIPA) session recognition technology in communications, and more particularly to a method, device and system for recognizing a LIPA session.

### BACKGROUND

A 3rd Generation Partnership Project (3GPP) Evolved Packet System (EPS) consists of an Evolved Universal Terrestrial Radio Access Network (E-UTRAN), a Mobility Management Entity (MME), a Serving Gateway (SGW), a Packet Data Network Gateway (P-GW), a Home Subscriber Server (HSS), a 3GPP Authentication, Authorization and Accounting (AAA) server, a Policy and Charging Rules Function (PCRF) entity and other support nodes.

When a wireless-side network element such as an Evolved Node B (eNodeB) and a Home Node B (HNB/HeNB) has a local IP access capability and a user subscribes local IP access, a terminal may implement local access to other IP devices in a home network or the Internet. Typically, a Local Gateway (LGW) may be additionally arranged to provide a strong support to LIPA technology. The LGW may be integrated with the wireless-side network element, so that the terminal may implement access to other IP devices in a local IP network or local access to the Internet through the LGW which is independently arranged or the LGW which is arranged in the wireless-side network element.

In a 4th-Generation (4G) mobile communication network, the LIPA technology is initially proposed on the basis of an HeNB network, and the LIPA technology means that service flow data of a user directly accesses from the HeNB not through a core network of an operating company. That is, the service flow data accessing from the HeNB is directly distributed by the HeNB so as to reduce a load and transmission cost of the core network.

The LIPA technology is to improve a function of an HeNB, and allows a terminal to access IP resources in a home/enterprise through the HeNB, which makes it possible for an operating company to develop more characteristic home/enterprise applications on the basis of the HeNB. In addition, an effect similar to local Wireless Fidelity (Wi-Fi) access may be achieved for a terminal without a Wi-Fi capability. Moreover, the LIPA technology and the Wi-Fi technology may be jointly used, and some novel flow mobility technologies may be combined, so that user experiences may be improved.

In a LIPA Public Data Network (PDN) connection technology, an LGW takes the place of a PGW, and the LGW may be integrated with an HeNB to implement direct access of service flow data of a user from the HeNB instead of a PGW of a core network, wherein involved network elements include the HeNB, an MME, an SGW and the LGW.

In a process of implementing the disclosure, the inventors find that the existing LIPA PDN session connection technology at least has the following shortcoming(s):
in the existing LIPA PDN session connection technology, an SGW may not recognize a LIPA PDN session, so that the SGW may not perform different charging policy and/or service policy control for the LIPA PDN session and a non-LIPA PDN session.

Document WO 2010/128773A2 discloses a method of controlling connection establishment in a server in charge of the control plane within a mobile communication network. The method of controlling connection establishment may include receiving a connection request message including a parameter indicating an identifier of a local gateway from a base station. The connection request message may include an access request message by the UE. The method of controlling connection establishment may further include determining whether a bearer for the UE is set to a path through nodes within the mobile communication network or set to a path through nodes within another wired network accessible by the local gateway by considering at least one of QoS, subscriber information for the UE, operator policy if the connection request message is received. If it is set to a path through nodes within the another wired network, the method of controlling connection establishment may further include transmitting a connection response message including a parameter indicating whether the bearer has been set or should be set to a path through nodes within the another wired network and an address of the local gateway to the base station.

Document WO 2013/006417A2 discloses methods and apparatus that determine whether service continuity is allowed in a target cell for a wireless transmit/receive unit (WTRU) connected to a source local gateway (LGW) via a local internet protocol access (LIPA) Packet Data Network (PDN) connection. The existence of a connection between the source LGW and a target LGW is also determined. Whether the WTRU user settings allow service continuity is determined. On a condition that service continuity is not allowed for the target LGW or for the WTRU, the LIPA PDN connection is deactivated. On a condition that service continuity is allowed for the target network and for the WTRU, the LIPA PDN connection is maintained. Methods for handling handover, paging and emergency calls are also described herein.

Document "'3rd Generation Partnership Project; Technical Specification Group Services and System Aspects; Policy and charging control architecture (Release 7)', 3GPP DRAFT; 23203-7E1, 3RD GGENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 19 July 2012, XP050909894" discloses the generic PCC aspects, while the specific for each type of IP-CAN are specified in Annex A (normative) and described in Annex D (information). For one type of IP-CAN the corresponding clause in Annex A shall be understood to be a realization of the TS main body. Annex A is therefore not a stand-alone specification for an IP-CAN. Annex A may specify additional restrictions to the specification body. Annex D describes PCC application to non-3GPP IP-CANs.

### SUMMARY

In view of this, the disclosure is intended to provide a method, device and system for recognizing a LIPA session and a computer storage medium.

To this end, the technical solutions of the embodiments of the disclosure are implemented as follows.

The embodiments of the disclosure provide a method for recognizing a LIPA session including that:
an SGW receives a session establishment request; and
when it is parsed that the session establishment request contains LIPA information, this session is determined to be a LIPA session, and charging policy and service policy control is performed for the LIPA session; wherein the LIPA information contained in the session establishment request may include a LIPA identifier and/or a specific charging characteristic parameter which identifies LIPA.

In the solution, the session establishment request may be sent by an MME.

In the solution, after the step that charging policy and service policy control is performed for the LIPA session, the method may further include that:
the SGW sends a session establishment response received from an LGW to the MME so that the MME sends an initial context establishment request to a wireless-side network element.

According to the abovementioned method, the embodiments of the disclosure provide an SGW including: a receiving module, a determination module and a control module, wherein
the receiving module may be configured to receive a session establishment request;
the determination module may be configured to, when the receiving module parses that the currently received session establishment request contains LIPA information, determine this session to be a LIPA session; and
the control module may be configured to perform charging policy and service policy control for the LIPA session; the LIPA information contained in the session establishment request may include a LIPA identifier and a specific charging characteristic parameter which identifies LIPA.

In the solution, the session establishment request may be sent by an MME.

In the solution, the SGW may further include:
a first sending module, configured to send a session establishment response received from an LGW to the MME so that the MME sends an initial context establishment request to a wireless-side network element.
the embodiments of the disclosure further provide an MME including: a first acquisition module and a third sending module, wherein
the first acquisition module may be configured to acquire LIPA information; and
the third sending module may be configured to contain the LIPA information in a session establishment request for sending to an SGW; the LIPA information may include a LIPA identifier and a specific charging characteristic parameter which identifies LIPA.

In the solution, the MME may further include:
a fourth sending module, configured to, when a session establishment response sent by the SGW is received, send an initial context establishment request to a wireless-side network element, the initial context establishment request being configured to indicate the wireless-side network element to establish a user-plane connection with an LGW.

According to the abovementioned methods, the embodiments of the disclosure provide a computer storage medium including a set of instructions, the instructions being executed to cause at least one processor to execute the abovementioned methods for recognizing the LIPA session.

### BRIEF DESCRIPTION OF THE DRAWINGS

In the drawings (which may not always be drawn to scale), similar reference signs may describe similar parts in different views. Similar reference signs with different letter suffixes may represent different examples of similar parts. The drawings substantially describe each embodiment discussed in the disclosure not limitedly but exemplarily.
Fig. 1 is an implementation flowchart of connection establishment of a LIPA session according to a conventional art;
Fig. 2 is an implementation flowchart of a method for recognizing a LIPA session according to an embodiment of the disclosure;
Fig. 3 is an implementation flowchart of another method for recognizing a LIPA session according to another embodiment of the disclosure;
Fig. 4 is an implementation flowchart of a method for recognizing a LIPA session at an SGW side according to an embodiment of the disclosure;
Fig. 5 is an implementation flowchart of a method for recognizing a LIPA session at an MME side according to an embodiment of the disclosure;
Fig. 6 is an implementation flowchart of a method for recognizing a LIPA session at an LGW side according to an embodiment of the disclosure;
Fig. 7 is an implementation flowchart of a method for recognizing a LIPA session in an attachment scenario according to embodiment 1 of the disclosure;
Fig. 8 is an implementation flowchart of a method for recognizing a LIPA session in a PDN connection scenario according to embodiment 1 of the disclosure;
Fig. 9 is an implementation flowchart of a method for recognizing a LIPA session in an attachment scenario according to embodiment 2 of the disclosure;
Fig. 10 is an implementation flowchart of a method for recognizing a LIPA session in a PDN connection scenario according to embodiment 2 of the disclosure;
Fig. 11 is an implementation flowchart of a method for recognizing a LIPA session in an attachment scenario according to embodiment 3 of the disclosure;
Fig. 12 is an implementation flowchart of a method for recognizing a LIPA session in a PDN connection scenario according to embodiment 3 of the disclosure;
Fig. 13 is a structure diagram of an SGW according to an embodiment of the disclosure;
Fig. 14 is a structure diagram of an MME according to an embodiment of the disclosure;
Fig. 15 is a structure diagram of an LGW according to an embodiment of the disclosure;
Fig. 16 is a structure diagram of a system for recognizing a LIPA session according to an embodiment of the disclosure; and
Fig. 17 is a structure diagram of another system for recognizing a LIPA session according to another embodiment of the disclosure.

### DETAILED DESCRIPTION

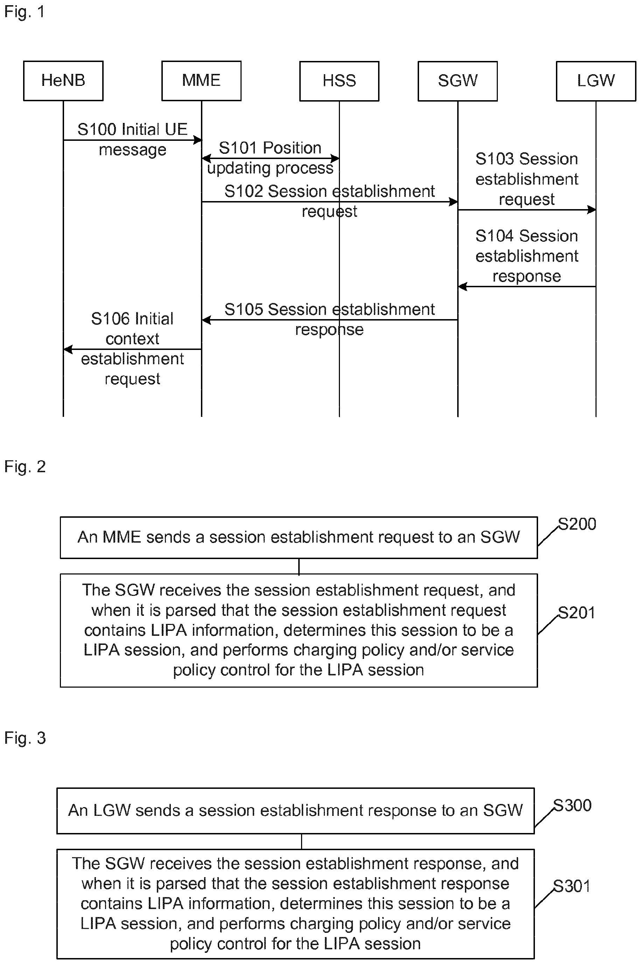

A current connection establishment flow of a LIPA PDN session, shown in Fig. 1, includes the following steps:
Step S100: User Equipment (UE) sends an attachment request to a wireless-side network element, and the wireless-side network element contains an IP address of an LGW in an initial UE message and sends to an MME after receiving the attachment request;
Step S101: the MME sends a position updating request to an HSS when receiving the initial UE message, and acquires LIPA subscription information;
Step S102: the MME searches for an IP address of an SGW by local analysis or Domain Name System (DNS) analysis, and sends a session establishment request to the SGW, the session establishment request containing the IP address of the LGW;
Step S103: the SGW forwards the session establishment request to the LGW upon receipt of the session establishment request;
Step S104: the LGW sends a session establishment response to the SGW upon receipt of the session establishment request;
Step S105: the SGW forwards the session establishment response to the MME upon receipt of the session establishment response, the session establishment response containing user-plane IP address and the user-plane IP address including a Tunnel Endpoint Identifier User (TEIDU) of the LGW and the IP address and TEIDU of the SGW; and
Step S106: the MME sends an initial context establishment request to the wireless-side network element upon receipt of the session establishment response, the session establishment response containing the user-plane IP address and being configured to indicate the wireless-side network element to establish a direct user-plane channel with the LGW according to the user-plane IP address and mutually transmit uplink and downlink data packets with the LGW through the user-plane channel.

However, in the abovementioned process, the SGW may not recognize a LIPA session. Therefore, in the embodiment of the disclosure, LIPA information may be contained in the session establishment request sent by the MME for sending to the SGW, or the LIPA information may be contained in the session establishment response sent by the LGW for sending to the SGW. In such a manner, the SGW may recognize this session to be a LIPA session according to the LIPA information and perform charging policy and/or service policy control for the LIPA session, so that different charging policy and/or service policy control may be performed for the LIPA session and a non-LIPA session.

Here, the LIPA information contained in the session establishment request includes a LIPA identifier and/or a specific charging characteristic parameter which identifies LIPA; and the LIPA information contained in the session establishment response includes the LIPA identifier.

Specifically, in a scenario where the LIPA information is contained in the session establishment request sent by the MME for sending to the SGW, when the UE only subscribes a LIPA attribute, the added parameter LIPA identifier is contained in the session establishment request sent by the MME for sending to the SGW, so that the SGW may recognize this session to be the LIPA session according to the LIPA identifier. When the UE subscribes the LIPA attribute, and subscribes a specific charging characteristic of an Access Point Name (APN) level and/or a UE level, LIPA may be identified by virtue of a specific charging characteristic parameter in a General Packet Radio Service (GPRS) Tunnel Protocol Version 2 (GTPV2) message without adding the parameter LIPA identifier, so that the specific charging characteristic parameter which identifies LIPA is contained in the session establishment request sent by the MME for sending to the SGW so as to enable the SGW to recognize this session to be the LIPA session according to the specific charging characteristic parameter which identifies LIPA.

Specifically, in a scenario where the LIPA information is contained in the session establishment response sent by the LGW for sending to the SGW, the UE is only required to subscribe the LIPA attribute. The added parameter LIPA identifier is contained in the session establishment response sent by the LGW for sending to the SGW at this moment, so that the SGW may recognize this session to be the LIPA session according to the LIPA identifier.

Specific implementation modes of the disclosure will be described below with reference to the drawings.

In a scenario where LIPA information is contained in a session establishment request sent by an MME for sending to an SGW, a basic processing flow of a method for recognizing a LIPA session according to the embodiment of the disclosure, shown in Fig. 2, includes the following steps:
Step S200: an MME sends a session establishment request to an SGW; and
Step S201: the SGW receives the session establishment request, and when it is parsed that the session establishment request contains LIPA information, determines this session to be a LIPA session, and performs charging policy and/or service policy control for the LIPA session.

Here, the LIPA information includes a LIPA identifier and/or a specific charging characteristic parameter which identifies LIPA.

When it is not parsed that the session establishment request contains the LIPA information, the SGW determines this session to be a non-LIPA session.

After the SGW perform charging policy and/or service policy control for the LIPA session, a session establishment response is sent to the MME through an LGW so that the MME sends an initial context establishment request to a wireless-side network element to indicate the wireless-side network element to establish a user-plane connection with the LGW.

Here, the wireless-side network element may be integrated with the LGW; and the wireless-side network element may be an eNodeB in an E-UTRAN, and may also be an HNB/HeNB, wherein the HNB/HeNB, as a miniature, low-power, plug-and-play and convenient-to-use Node B, is deployed in an indoor place such as a home and an office, and mainly serves to provide a higher service rate for a user. It can reduce cost required by use of high-rate service and also overcome a shortcoming of coverage of an existing distributed cellular wireless communication system.

In a scenario where LIPA information is contained in a session establishment response sent by an LGW for sending to an SGW, a basic processing flow of a method for recognizing a LIPA session according to the embodiment of the disclosure, shown in Fig. 3, includes the following steps:
Step S300: an LGW sends a session establishment response to an SGW; and
Step S301: the SGW receives the session establishment response, and when it is parsed that the session establishment response contains LIPA information, determines this session to be a LIPA session, and performs charging policy and/or service policy control for the LIPA session.

Here, the LIPA information includes a LIPA identifier.

After the SGW performs charging policy and/or service policy control for the LIPA session, the session establishment response is forwarded to an MME for the MME to send an initial context establishment request to a wireless-side network element to indicate the wireless-side network element to establish a user-plane connection with the LGW.

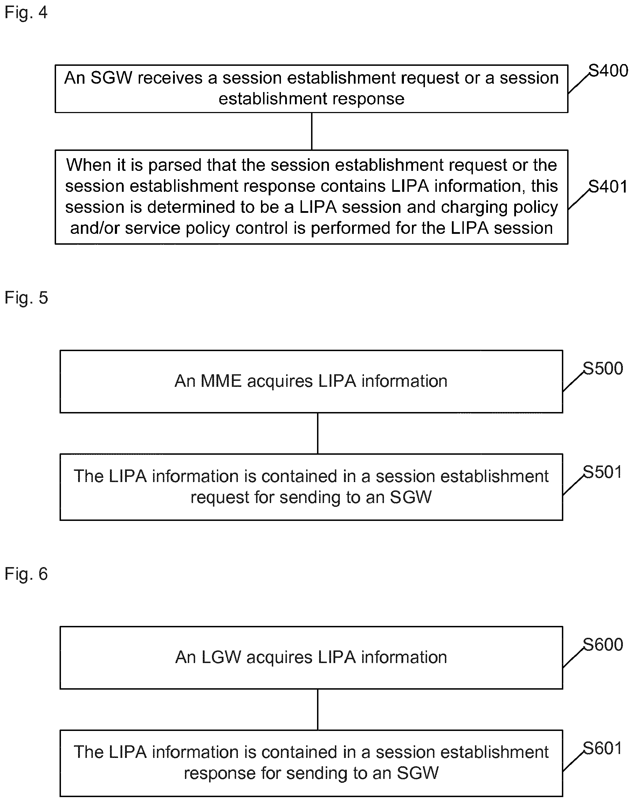

A basic processing flow of a method for recognizing a LIPA session at an SGW side according to the embodiment of the disclosure, shown in Fig. 4, includes the following steps:
Step S400: an SGW receives a session establishment request or a session establishment response; and
Step S401: when it is parsed that the session establishment request or the session establishment response contains LIPA information, this session is determined to be a LIPA session, and charging policy and/or service policy control is performed for the LIPA session.

Here, the LIPA information contained in the session establishment request includes a LIPA identifier and/or a specific charging characteristic parameter which recognizes LIPA; and the LIPA information contained in the session establishment response includes the LIPA identifier.

Here, the session establishment request is sent by an MME, and the session establishment response is sent by an LGW.

After the SGW performs charging policy and/or service policy control for the LIPA session, the session establishment response is sent to the MME through the LGW for the MME to send an initial context establishment request to a wireless-side network element to indicate the wireless-side network element to establish a user-plane connection with the LGW; or,
the session establishment response is forwarded to the MME for the MME to send the initial context establishment request to the wireless-side network element to indicate the wireless-side network element to establish the user-plane connection with the LGW.

A basic processing flow of a method for recognizing a LIPA session at an MME side according to the embodiment of the disclosure, shown in Fig. 5, includes the following steps.

Step S500: an MME acquires LIPA information.

Here, the LIPA information includes a LIPA identifier and/or a specific charging characteristic parameter which identifies LIPA.

Step S501: the LIPA information is contained in a session establishment request for sending to an SGW.

When a session establishment response sent by the SGW is received, the MME sends an initial context establishment request to a wireless-side network element, the initial context establishment request being configured to indicate the wireless-side network element to establish a user-plane connection with an LGW.

A basic processing flow of a method for recognizing a LIPA session at an LGW side according to the embodiment of the disclosure, shown in Fig. 6, includes the following steps:
Step S600: an LGW acquires LIPA information; and
Step S601: the LIPA information is contained in a session establishment response for sending to an SGW.

Here, the LIPA information includes a LIPA identifier.

In the embodiment of the disclosure, the MME sends the session establishment request to the SGW or the LGW sends the session establishment response to the SGW, and the SGW performs analysis after receiving the session establishment request sent by the MME or the session establishment response sent by the LGW, and when it is parsed that the session establishment request or the session establishment response contains the LIPA information, determines this session to be the LIPA session and performs charging policy and/or service policy control for the LIPA session, so that different charging policy and/or service policy control may be performed for the LIPA session and a non-LIPA session.

### Embodiment 1

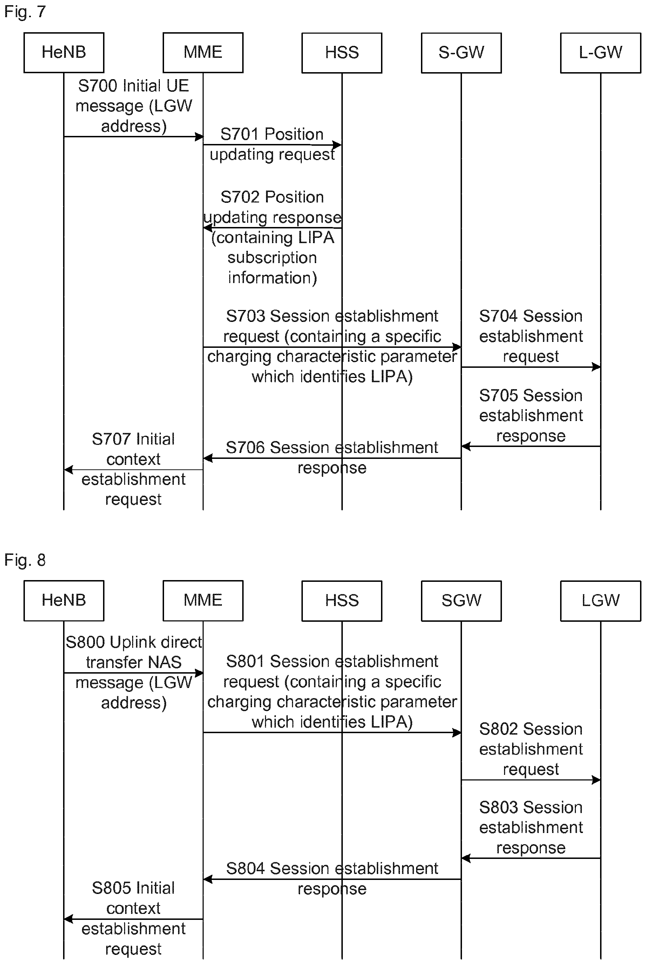

In a scenario where UE is initially attached to a 4G network through an HeNB, the UE subscribes a LIPA attribute and subscribes a specific charging characteristic of an APN level and/or a UE level. A detailed processing flow of recognizing a LIPA session in embodiment 1 of the disclosure, shown in Fig. 7, includes the following steps.

Step S700: the UE is attached to the 4G network, and the HeNB contains an IP address of an LGW in an initial UE message for sending to an MME.

Step S701: the MME sends a position updating request to an HSS upon receipt of the initial UE message.

Step S702: the MME receives a position updating response returned by the HSS.

Here, the position updating response contains LIPA subscription information, and the LIPA subscription information includes APN-level LIPA subscription information and/or a UE-level LIPA roaming right, and a specific charging characteristic parameter.

Wherein, the APN-level LIPA subscription information is: APN-Configuration-Profile:APN-Configuration:LIPA-Permission; and the UE-level LIPA roaming right is: VPLMN-LIPA-Allowed.

Step S703: when receiving the position updating response, the MME establishes a LIPA PDN session connection according to the LIPA subscription information, and sends a session establishment request to an SGW.

Here, the session establishment request contains the specific charging characteristic parameter which identifies LIPA.

Step S704: when receiving the session establishment request, the SGW stores the specific charging characteristic parameter which identifies LIPA and related information locally to accordingly decide whether it is necessary to subsequently adopt specific charging policy and/or service policy control for a LIPA PDN session or not, and forwards the session establishment request to the LGW.

Step S705: the LGW returns a session establishment response to the SGW upon receipt of the session establishment request.

Step S706: the SGW forwards the session establishment response to the MME upon receipt of the session establishment response.

Here, the session establishment response contains a user-plane IP address, and the user-plane IP address includes: a TEIDU of the LGW and the user-plane IP address and TEIDU of the SGW.

Step S707: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

In a scenario where UE initiates PDN connection establishment after being attached, the UE subscribes a LIPA attribute and subscribes a specific charging characteristic of an APN level and/or a UE level. A detailed processing flow of recognizing a LIPA session in embodiment 1 of the disclosure, shown in Fig. 8, includes the following steps.

Step S800: a user initiates PDN connection establishment after being attached to a 4G network, and an HeNB contains an IP address of an LGW in an uplink direct transfer Network Attached Storage (NAS) message for sending to an MME.

Step S801: upon receipt of the uplink direct transfer NAS message, the MME establishes a LIPA PDN connection according to LIPA subscription information stored during attachment, and sends a session establishment request to an SGW.

Here, the session establishment request contains a specific charging characteristic parameter which identifies LIPA.

Step S802: upon receipt of the session establishment request, the SGW stores the specific charging characteristic parameter which identifies LIPA and related information locally to accordingly decide whether it is necessary to subsequently adopt specific charging policy and/or service policy control for a LIPA PDN session or not, and forwards the session establishment request to the LGW.

Step S803: the LGW returns a session establishment response to the SGW upon receipt of the session establishment request.

Step S804: the SGW forwards the session establishment response to the MME upon receipt of the session establishment response.

Here, the session establishment response contains a user-plane IP address, and the user-plane IP address includes: a TEIDU of the LGW and the user-plane IP address and TEIDU of the SGW.

Step S805: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

### Embodiment 2

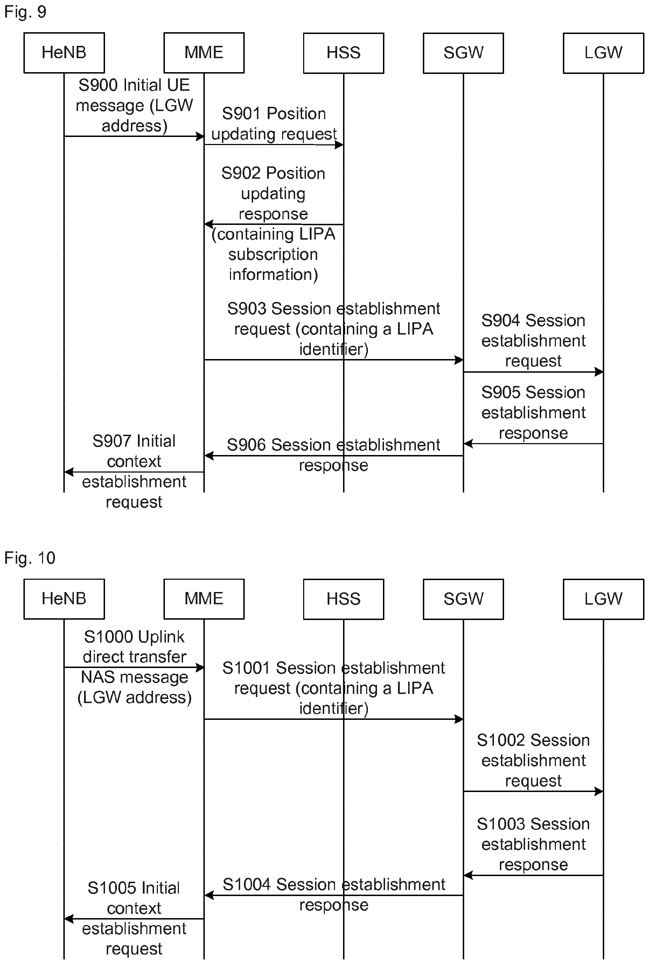

In a scenario where UE is initially attached to a 4G network through an HeNB, the UE only subscribes a LIPA attribute, and it is necessary to set a newly-added parameter LIPA identifier at this moment. A detailed processing flow of recognizing a LIPA session in embodiment 2 of the disclosure, shown in Fig. 9, includes the following steps.

Step S900: the UE is attached to the 4G network, and the HeNB contains an IP address of an LGW in an initial UE message and sends to an MME.

Step S901: the MME sends a position updating request to an HSS upon receipt of the initial UE message.

Step S902: the MME receives a position updating response returned by the HSS.

Here, the position updating response contains LIPA subscription information, and the LIPA subscription information includes APN-level LIPA subscription information and/or a UE-level LIPA roaming right.

Herein, the APN-level LIPA subscription information is: APN-Configuration-Profile:APN-Configuration:LIPA-Permission; and the UE-level LIPA roaming right is: VPLMN-LIPA-Allowed.

Step S903: upon receipt of the position updating response, the MME establishes a LIPA PDN session connection according to the LIPA subscription information, and sends a session establishment request to an SGW.

Here, the session establishment request contains a LIPA identifier.

Step S904: upon receipt of the session establishment request, the SGW stores the LIPA identifier and related information locally to accordingly decide whether it is necessary to subsequently adopt specific charging policy and/or service policy control for a LIPA PDN session or not, and forwards the session establishment request to the LGW.

Step S905: the LGW returns a session establishment response to the SGW upon receipt of the session establishment request.

Step S906: the SGW forwards the session establishment response to the MME upon receipt of the session establishment response.

Here, the session establishment response contains a user-plane IP address, and the user-plane IP address includes: a TEIDU of the LGW and the user-plane IP address and TEIDU of the SGW.

Step S907: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

In a scenario where UE initiates PDN connection establishment after being attached, the UE only subscribes a LIPA attribute, and it is necessary to set a newly-added parameter LIPA identifier at this moment. A detailed processing flow of recognizing a LIPA session in embodiment 2 of the disclosure, shown in Fig. 10, includes the following steps.

Step S1000: a user initiates PDN connection establishment after being attached to a 4G network, and an HeNB contains an IP address of an LGW in an uplink direct transfer NAS message for sending to an MME.

Step S1001: upon receipt of a PDN connection request, the MME establishes a LIPA PDN connection according to LIPA subscription information stored during attachment, and sends a session establishment request to an SGW.

Here, the session establishment request contains a LIPA identifier.

Step S1002: upon receipt of the session establishment request, the SGW stores the LIPA identifier and related information locally to accordingly decide whether it is necessary to subsequently adopt specific charging policy and/or service policy control for a LIPA PDN session or not, and forwards the session establishment request to the LGW.

Step S1003: the LGW returns a session establishment response to the SGW upon receipt of the session establishment request.

Step S1004: the SGW forwards the session establishment response to the MME upon receipt of the session establishment response.

Here, the session establishment response contains a user-plane IP address, and the user-plane IP address includes: a TEIDU of the LGW and the user-plane IP address and TEIDU of the SGW.

Step S1005: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

### Embodiment 3

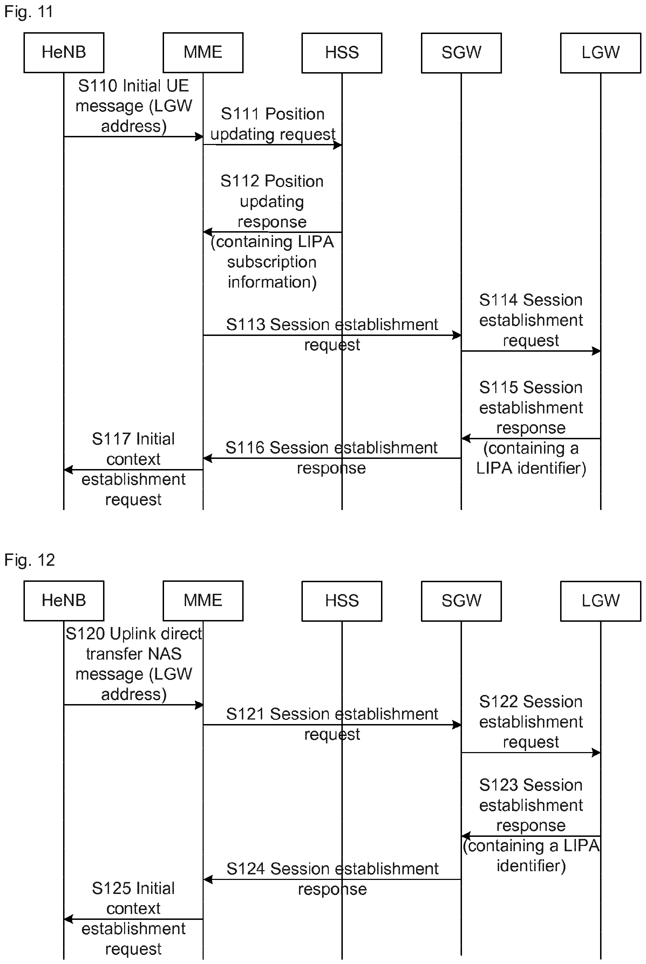

In a scenario where UE is attached to a 4G network through an HeNB, the UE is only required to subscribe a LIPA attribute, and it is necessary to set a newly-added parameter LIPA identifier at this moment. A detailed processing flow of recognizing a LIPA session in embodiment 3 of the disclosure, shown in Fig. 11, includes the following steps.

Step S110: the UE is attached to the 4G network, and the HeNB contains an IP address of an LGW in an initial UE message for sending to an MME.

Step S111: the MME sends a position updating request to an HSS upon receipt of the initial UE message.

Step S112: the MME receives a position updating response returned by the HSS.

Here, the position updating response contains LIPA subscription information, and the LIPA subscription information includes APN-level LIPA subscription information and/or a UE-level LIPA roaming right.

Herein, the APN-level LIPA subscription information is: APN-Configuration-Profile:APN-Configuration:LIPA-Permission; and the UE-level LIPA roaming right is: VPLMN-LIPA-Allowed.

Step S113: upon receipt of the position updating response, the MME establishes a LIPA PDN session connection according to the LIPA subscription information, and sends a session establishment request to an SGW.

Step S114: the SGW forwards the session establishment request to the LGW upon receipt of the session establishment request.

Step S115: the LGW returns a session establishment response to the SGW upon receipt of the session establishment request.

Here, the session establishment response contains a LIPA identifier.

Step S116: upon receipt of the session establishment response, the SGW stores the LIPA identifier and related information locally to accordingly decide whether it is necessary to subsequently adopt specific charging policy and/or service policy control for a LIPA PDN session or not, and contains a user-plane IP address in the session establishment response for sending to the MME.

Here, the SGW may delete the LIPA identifier in the session establishment response and then sends to the MME.

The user-plane IP address includes: a TEIDU of the LGW and the user-plane IP address and TEIDU of the SGW.

Step S117: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

In a scenario where UE initiates PDN connection establishment after being attached, the UE is only required to subscribe a LIPA attribute, and it is necessary to set a newly-added parameter LIPA identifier at this moment. A detailed processing flow of recognizing a LIPA session in embodiment 3 of the disclosure, shown in Fig. 12, includes the following steps.

Step S120: a user initiates PDN connection establishment after being attached to a 4G network, and an HeNB contains an IP address of an LGW in an uplink direct transfer NAS message for sending to an MME.

Step S121: upon receipt of the uplink direct transfer NAS message, the MME establishes a LIPA PDN connection according to LIPA subscription information stored during attachment, and sends a session establishment request to an SGW.

Step S122: the SGW forwards the session establishment request to the LGW upon receipt of the session establishment request.

Step S123: the LGW returns a session establishment response to the SGW upon receipt of the session establishment request, the session establishment response containing a LIPA identifier.

Step S124: upon receipt of the session establishment response, the SGW stores the LIPA identifier and related information locally to accordingly decide whether it is necessary to subsequently adopt specific charging policy and/or service policy control for a LIPA PDN session or not, and contains a user-plane IP address in the session establishment response for sending to the MME.

Here, the SGW may delete the LIPA identifier in the session establishment response and then sends to the MME.

The user-plane IP address includes: a TEIDU of the LGW and the user-plane IP address and TEIDU of the SGW.

Step S125: the MME contains the user-plane IP address in an initial context establishment request for sending to the HeNB upon receipt of the session establishment response.

Here, the initial context establishment request is configured to indicate the HeNB to establish a direct user-plane channel with the LGW according to the user-plane IP address, and the HeNB and the LGW may mutually transmit uplink and downlink data packets through the user-plane channel.

In embodiment 1, the specific charging characteristic parameter which identifies LIPA is contained in the session establishment request sent by the MME for sending to the SGW; in embodiment 2, the LIPA identifier is contained in the session establishment request sent by the MME for sending to the SGW; and in embodiment 3, the LIPA identifier is contained in the session establishment response sent by the LGW for sending to the SGW. In such a manner, the SGW may recognize this session to be a LIPA session according to the LIPA identifier or the specific charging characteristic parameter which identifies LIPA and perform charging policy and/or service policy control for the LIPA session, so that different charging policy and/or service policy control is performed for the LIPA session and a non-LIPA session.

In order to implement the abovementioned methods, the embodiments of the disclosure further provide an SGW, an MME, an LGW and a system for recognizing a LIPA session. Principles for the SGW, the MME, the LGW and the system for recognizing the LIPA session to solve problems are similar to the methods. Therefore, implementation processes and implementation principles of the SGW, the MME, the LGW and the system for recognizing the LIPA session may refer to descriptions about implementation processes and implementation principles of the abovementioned methods, and repeated parts will not be elaborated herein.

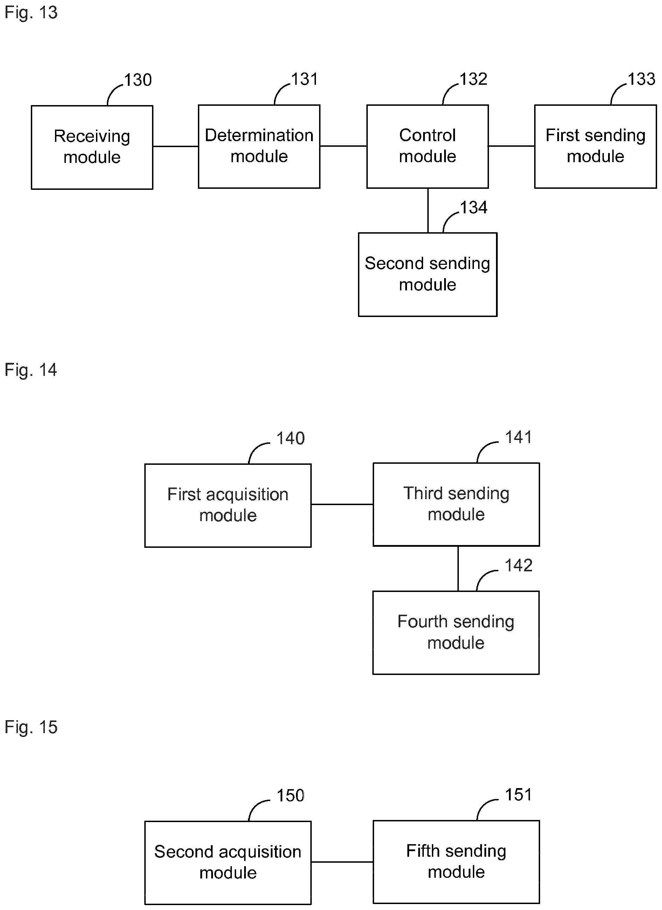

As shown in Fig. 13, an SGW provided by the embodiments of the disclosure includes: a receiving module 130, a determination module 131 and a control module 132.

The receiving module 130 is configured to receive a session establishment request or a session establishment response.

The determination module 131 is configured to, when the receiving module 130 parses that the currently received session establishment request or the session establishment response contains LIPA information, determine this session to be a LIPA session.

The control module 132 is configured to perform charging policy and/or service policy control for the LIPA session.

The abovementioned manner for dividing the function modules is only one implementation mode provided by the embodiments of the disclosure, but not limiting the disclosure.

During specific implementation, the LIPA information contained in the session establishment request includes a LIPA identifier and/or a specific charging characteristic parameter which identifies LIPA; and the LIPA information contained in the session establishment response includes the LIPA identifier.

During specific implementation, the session establishment request is sent by an MME, and the session establishment response is sent by an LGW.

During specific implementation, the SGW further includes:
a first sending module 133, configured to send the session establishment response to the MME through the LGW for the MME to send an initial context establishment request to a wireless-side network element; or,
a second sending module 134, configured to forward the session establishment response to the MME for the MME to send the initial context establishment request to the wireless-side network element.

As shown in Fig. 14, an MME provided by the embodiments of the disclosure includes: a first acquisition module 140 and a third sending module 141.

The first acquisition module 140 is configured to acquire LIPA information.

The third sending module 141 is configured to contain the LIPA information in a session establishment request for sending to an SGW.

The abovementioned manner for dividing the function modules is only one implementation mode provided by the embodiment of the disclosure, but not limiting the disclosure.

During specific implementation, the LIPA information includes a LIPA identifier and/or a specific charging characteristic parameter which identifies LIPA.

During specific implementation, the MME further includes:
a fourth sending module 142, configured to, when a session establishment response sent by the SGW is received, send an initial context establishment request to a wireless-side network element, the initial context establishment request being configured to indicate the wireless-side network element to establish a user-plane connection with an LGW.

As shown in Fig. 15, an LGW provided by the embodiment of the disclosure includes: a second acquisition module 150 and a fifth sending module 151.

The second acquisition module 150 is configured to acquire LIPA information.

The fifth sending module 151 is configured to contain the LIPA information in a session establishment response for sending to an SGW.

The abovementioned manner for dividing the function modules is only one implementation mode provided by the embodiment of the disclosure, but not limiting the disclosure.

During specific implementation, the LIPA information includes a LIPA identifier.

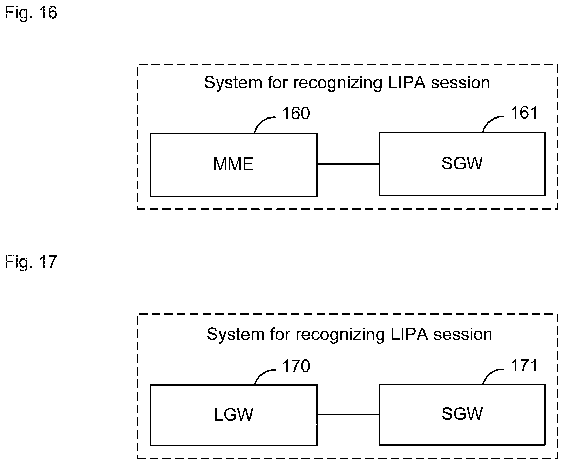

As shown in Fig. 16, a system for recognizing a LIPA session provided by the embodiments of the disclosure includes: an MME 160 and an SGW 161.

The MME 160 is configured to send a session establishment request to the SGW 161.

The SGW 161 is configured to receive the session establishment request, and when it is parsed that the session establishment request contains LIPA information, determine this session to be a LIPA session, and perform charging policy and/or service policy control for the LIPA session.

Here, a specific structure of the MME 160 and functions of each component are the same as those of the MME shown in Fig. 14.

Here, a specific structure of the SGW 161 and functions of each component are the same as those of the SGW shown in Fig. 13.

During specific implementation, the LIPA information includes a LIPA identifier and/or a specific charging characteristic parameter which identifies LIPA.

During specific implementation, the SGW 161 is further configured to send a session establishment response to the MME 160 through an LGW for the MME 160 to send an initial context establishment request to a wireless-side network element.

As shown in Fig. 17, another system for recognizing a LIPA session provided by the embodiments of the disclosure includes: an SGW 170 and an LGW 171.

The LGW 170 is configured to send a session establishment response to the SGW 171.

The SGW 171 is configured to receive the session establishment response, and when it is parsed that the session establishment response contains LIPA information, determine this session to be a LIPA session, and perform charging policy and/or service policy control for the LIPA session.

Here, a specific structure of the LGW 170 and functions of each component are the same as those of the LGW shown in Fig. 15.

Here, a specific structure of the SGW 171 and functions of each component are the same as those of the SGW shown in Fig. 13.

During specific implementation, the LIPA information includes a LIPA identifier.

During specific implementation, the SGW 171 is further configured to forward the session establishment response to an MME for the MME to send an initial context establishment request to a wireless-side network element.

During a practical application, the receiving module 130, the first sending module 133 and the second sending module 134 may be implemented by a transceiver located in the SGW; the determination module 131 and the control module 132 may be implemented by a Central Processing Unit (CPU), Micro Processing Unit (MPU), Digital Signal Processor (DSP) or Field-Programmable Gate Array (FPGA) in the SGW; the first acquisition module 140, the third sending module 141 and the fourth sending module 142 may be implemented by a CPU, MPU, DSP or FPGA in the MME; and the second acquisition module 150 and the fifth sending module 151 may be implemented by a CPU, MPU, DSP or FPGA in the LGW in combination with a transceiver.

The methods of the disclosure are not limited to the embodiments in the specific implementation modes, and other implementation modes obtained by those skilled in the art according to the technical solutions of the disclosure also fall within the scope of technical innovation of the disclosure.

Those skilled in the art should know that the embodiments of the disclosure may be provided as a method, a system or a computer program product. Therefore, the disclosure may adopt a form of hardware, software and a combination thereof. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, device (system) and computer program product according to the embodiments of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing device to generate a machine, so that a device for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or many flows in the flowcharts and/or one block or many blocks in the block diagrams are provided by the instructions executed on the computer or the other programmable data processing device.

On such a basis, the embodiments of the disclosure further provide a computer storage medium, which includes a set of instructions, the instructions being executed to cause at least one processor to execute the method for recognizing the LIPA session at the SGW side, the method for recognizing the LIPA session at the MME side or the method for recognizing the LIPA session at the LGW side.

## Claims

1. A method for recognizing a Local Internet Protocol, IP, Access, LIPA, session, comprising:
receiving (S400), by a Serving Gateway, SGW, a session establishment request; and
when it is parsed that the session establishment request contains LIPA information, determining (S401) this session to be a LIPA session, and performing charging policy and/or service policy control for the LIPA session;
**characterized in that** the LIPA information contained in the session establishment request comprises a LIPA identifier and a specific charging characteristic parameter which identifies LIPA.

2. The method according to claim 1, wherein the session establishment request is sent by a Mobility Management Entity, MME.

3. The method according to claim 2, after performing charging policy and/or service policy control for the LIPA session, further comprising:
sending, by the SGW, to the MME a session establishment response received from a Local Gateway, LGW so that the MME sends an initial context establishment request to a wireless-side network element.

4. The method according to claim 1, further comprising: before receiving, by the SGW, the session establishment request,
acquiring, by a Mobility Management Entity, MME, LIPA information; and
containing the LIPA information in the session establishment request for sending to a Serving Gateway, SGW.

5. A Serving Gateway, SGW, comprising: a receiving module (130), a determination module (131) and a control module (132), wherein
the receiving module (130) is configured to receive a session establishment request;
the determination module (131) is configured to, when the receiving module parses that the currently received session establishment request contains Local Internet Protocol, IP, Access, LIPA, information, determine this session to be a LIPA session; and
the control module (132) is configured to perform charging policy and/or service policy control for the LIPA session;
**characterized in that** the LIPA information contained in the session establishment request comprises a LIPA identifier and a specific charging characteristic parameter which identifies LIPA.

6. The method according to claim 5, wherein the session establishment request is sent by a Mobility Management Entity, MME.

7. The SGW according to claim 6, further comprising:
a first sending module (133), configured to send, to the MME, a session establishment response received from a Local Gateway, LGW so that the MME sends an initial context establishment request to a wireless-side network element.

8. A Mobility Management Entity, MME, comprising: a first acquisition module (140) and a third sending module (141), wherein
the first acquisition module (140) is configured to acquire Local Internet Protocol, IP, Access, LIPA, information; and
the third sending module (141) is configured to contain the LIPA information in a session establishment request for sending to a Serving Gateway, SGW; **characterized in that** the LIPA information comprises a LIPA identifier and a specific charging characteristic parameter which identifies LIPA.

9. The MME according to claim 8, further comprising:
a fourth sending module (142), configured to, when a session establishment response sent by the SGW is received, send an initial context establishment request to a wireless-side network element, the initial context establishment request being configured to indicate the wireless-side network element to establish a user-plane connection with a Local Gateway, LGW.

10. A computer storage medium, comprising a set of instructions, the instructions being executed to cause at least one processor to execute the method for recognizing the Local Internet Protocol, IP, Access, LIPA, session according to any one of claims 1-4.

## Patentansprüche

1. Verfahren zur Erkennung einer Sitzung eines lokalen Internetprotokoll-, IP, Zugangs, LIPA, umfassend:
Empfangen (S400), durch ein Serving Gateway, SGW, einer Sitzungsherstellungsanforderung; und
wenn es analysiert wird, dass die Sitzungsherstellungsanforderung LIPA-Informationen enthält, Bestimmen (S401), dass diese Sitzung eine LIPA-Sitzung sein soll, und Durchführen einer Abrechnungsrichtlinien- und/oder einer Dienstrichtliniensteuerung für die LIPA-Sitzung;
**dadurch gekennzeichnet, dass** die LIPA-Informationen, die in der Sitzungsherstellungsanforderung enthalten sind, eine LIPA-Kennung und einen spezifischen Abrechnungskennparameter umfassen, der den LIPA identifiziert.

2. Verfahren nach Anspruch 1, worin die Sitzungsherstellungsanforderung von einer Mobilitätsverwaltungsentität, MME, gesandt wird.

3. Verfahren nach Anspruch 2, nach dem Durchführen der Abrechnungsrichtlinien- und/oder der Dienstrichtliniensteuerung für die LIPA-Sitzung, ferner umfassend:
Senden, durch das SGW, an die MME einer Sitzungsherstellungsantwort, die von einem lokalen Gateway, LGW, empfangen wird, so dass die MME eine anfängliche Kontext-Herstellungsanforderung an ein drahtloses Seiten-Netzwerkelement sendet.

4. Verfahren nach Anspruch 1, ferner umfassend: vor dem Empfangen, durch das SGW, der Sitzungsherstellungsanforderung,
Erfassen, durch eine Mobilitätsverwaltungsentität, MME, von LIPA-Informationen; und
Enthalten der LIPA-Informationen in der Sitzungsherstellungsanforderung zum Senden an ein Serving Gateway, SGW.

5. Serving Gateway, SGW, umfassend: ein Empfangsmodul (130), ein Bestimmungsmodul (131) und ein Steuerungsmodul (132), worin
das Empfangsmodul (130) dafür eingerichtet ist, eine Sitzungsherstellungsanforderung zu empfangen;
das Bestimmungsmodul (131) dafür eingerichtet ist, wenn das Empfangsmodul analysiert, dass die aktuell empfangene Sitzungsherstellungsanforderung lokale Internetprotokoll-, IP, Zugangs-, LIPA, Informationen enthält, zu bestimmen, dass diese Sitzung eine LIPA-Sitzung sein soll; und
das Steuerungsmodul (132) dafür eingerichtet ist, eine Abrechnungsrichtlinien- und/oder einer Dienstrichtliniensteuerung für die LIPA-Sitzung durchzuführen;
**dadurch gekennzeichnet, dass** die LIPA-Informationen, die in der Sitzungsherstellungsanforderung enthalten sind, eine LIPA-Kennung und einen spezifischen Abrechnungskennparameter umfassen, der den LIPA identifiziert.

6. Verfahren nach Anspruch 5, worin die Sitzungsherstellungsanforderung von einer Mobilitätsverwaltungsentität, MME, gesandt wird.

7. SGW nach Anspruch 6, ferner umfassend:
ein erstes Sendemodul (133), das dafür eingerichtet ist, an die MME eine Sitzungsherstellungsantwort zu senden, die von einem lokalen Gateway, LGW, empfangen wird, so dass die MME eine anfängliche Kontext-Herstellungsanforderung an ein drahtloses Seiten-Netzwerkelement sendet.

8. Mobilitätsverwaltungsentität, MME, umfassend: ein erstes Erfassungsmodul (140) und ein drittes Sendemodul (141), worin
das erste Erfassungsmodul (140) dafür eingerichtet ist, lokale Internetprotokoll-, IP, Zugangs-, LIPA, Informationen zu erfassen; und
das dritte Sendemodul (141) dafür eingerichtet ist, die LIPA-Informationen in einer Sitzungsherstellungsanforderung zum Senden an ein Serving Gateway, SGW, zu enthalten;
**dadurch gekennzeichnet, dass** die LIPA-Informationen eine LIPA-Kennung und einen spezifischen Abrechnungskennparameter umfassen, der den LIPA identifiziert.

9. MME nach Anspruch 8, ferner umfassend:
ein viertes Sendemodul (142), das dafür eingerichtet ist, wenn eine Sitzungsherstellungsantwort, die vom SGW gesendet wird, empfangen wird, eine anfängliche Kontext-Herstellungsanforderung an ein drahtloses Seiten-Netzwerkelement zu senden, wobei die anfängliche Kontext-Herstellungsanforderung dafür eingerichtet ist, das drahtlose Seiten-Netzwerkelement anzuweisen, eine Benutzer-Ebene-Verbindung mit einem lokalen Gateway, LGW, herzustellen.

10. Computerspeichermedium, umfassend einen Satz Anweisungen, wobei die Anweisungen ausgeführt werden, um zu veranlassen, dass zumindest ein Prozessor das Verfahren zur Erkennung der Sitzung eines lokalen Internetprotokoll-, IP, Zugangs, LIPA, gemäß einem der Ansprüche 1-4 durchführt.

## Revendications

1. Procédé pour reconnaître une session d'accès au protocole Internet, IP, local, LIPA, comprenant :
la réception (S400), par une passerelle de service, SGW, d'une demande d'établissement de session ; et
lorsqu'il est analysé que la demande d'établissement de session contient des informations LIPA, la détermination (S401) que cette session est une session LIPA et l'exécution d'un contrôle de la politique de facturation et/ou de la politique de service pour la session LIPA ;
**caractérisé en ce que** les informations LIPA contenues dans la demande d'établissement de session comprennent un identificateur LIPA et un paramètre caractéristique de facturation spécifique qui identifie LIPA.

2. Procédé selon la revendication 1, où la demande d'établissement de session est envoyée par une entité de gestion de la mobilité, MME.

3. Procédé selon la revendication 2, après l'exécution d'un contrôle de la politique de facturation et/ou de la politique de service pour la session LIPA, comprenant en outre :
l'envoi, par la SGW, à la MME d'une réponse d'établissement de session reçue d'une passerelle locale, LGW afin que la MME envoie une demande d'établissement de contexte initial à un élément de réseau côté sans fil.

4. Procédé selon la revendication 1, comprenant en outre : avant de recevoir, par la SGW, la demande d'établissement de session,
l'acquisition, par une entité de gestion de la mobilité, MME, d'informations LIPA ; et
le confinement des informations LIPA dans la demande d'établissement de session à envoyer à une passerelle de service, SGW.

5. Passerelle de service, SGW, comprenant : un module de réception (130), un module de détermination (131) et un module de contrôle (132), où le module de réception (130) est configuré pour recevoir une demande d'établissement de session ;
le module de détermination (131) est configuré pour, lorsque le module de réception analyse que la demande d'établissement de session actuellement reçue contient des informations d'accès au protocole Internet local, IP, LIPA, déterminer que cette session est une session LIPA ; et le module de contrôle (132) est configuré pour effectuer un contrôle de la politique de facturation et/ou de la politique de service pour la session LIPA ; **caractérisée en ce que** les informations LIPA contenues dans la demande d'établissement de session comprennent un identificateur LIPA et un paramètre caractéristique de facturation spécifique qui identifie LIPA.

6. Procédé selon la revendication 5, où la demande d'établissement de session est envoyée par une entité de gestion de la mobilité, MME.

7. SGW selon la revendication 6, comprenant aussi :
un premier module d'envoi (133), configuré pour envoyer, à la MME, une réponse d'établissement de session reçue d'une passerelle locale, LGW afin que la MME envoie une demande d'établissement de contexte initial à un élément de réseau côté sans fil.

8. Entité de gestion de la mobilité, MME, comprenant : un premier module d'acquisition (140) et un troisième module d'envoi (141), où le premier module d'acquisition (140) est configuré pour acquérir des informations d'accès au protocole Internet local, IP, LIPA ; et
le troisième module d'envoi (141) est configuré pour contenir les informations LIPA dans une demande d'établissement de session à envoyer à une passerelle de service, SGW.
**caractérisée en ce que** les informations LIPA comprennent un identificateur LIPA et un paramètre caractéristique de facturation spécifique qui identifie LIPA.

9. MME selon la revendication 8, comprenant aussi :
un quatrième module d'envoi (142), configuré pour, lorsqu'une réponse d'établissement de session envoyée par la SGW est reçue, envoyer une demande d'établissement de contexte initial à un élément de réseau côté sans fil, la demande d'établissement de contexte initial étant configurée pour indiquer l'élément de réseau côté sans fil pour établir une connexion dans le plan utilisateur avec une passerelle locale, LGW.

10. Support de stockage informatique, comprenant un ensemble d'instructions, les instructions étant exécutées pour amener au moins un processeur à exécuter le procédé de reconnaissance de la session d'accès d'un protocole Internet local, IP, LIPA selon l'une quelconque des revendications de 1 à 4.
